Europäisches Patentamt

European Patent Office

Office européen des brevets

(11) Publication number: **0 094 122**
**B1**

## EUROPEAN PATENT SPECIFICATION

(45) Date of publication of patent specification: 30.07.86

(51) Int. Cl.⁴: **F 16 L 3/12,** H 01 R 4/64

(21) Application number: 83200626.6

(22) Date of filing: 02.05.83

(54) **Clamp.**

(30) Priority: 06.05.82 NL 8201862

(43) Date of publication of application:
16.11.83 Bulletin 83/46

(45) Publication of the grant of the patent:
30.07.86 Bulletin 86/31

(84) Designated Contracting States:
AT BE CH DE FR GB IT LI LU NL SE

(56) References cited:
FR-A-2 406 147
GB-A-2 097 508
US-A-3 493 206

(73) Proprietor: Erico Europa B.V.
75, Jules Verneweg
NL-5015 BG Tilburg (NL)

(72) Inventor: Kies, Antonius Maria
No. 8, Oranjelaan
NL-5062 KA Oisterwijk (NL)

(74) Representative: 't Jong, Bastiaan Jacobus et al
OCTROOIBUREAU ARNOLD & SIEDSMA
Sweelinckplein 1
NL-2517 GK 's-Gravenhage (NL)

Courier Press, Leamington Spa, England.

## Description

The invention relates to a clamp comprising a substantially annular receiving member for an object to be clamped, a body connected to said receiving member and having an internally screwthreaded bore, and a screwthreaded element such as a bolt engaging said bore and having a length such that it can come into contact with the object received in the receiving member.

A clamp of this kind is, for example, a clamp for fastening a connecting lead to a ground electrode, as shown in applicants brochure "CADWELD Earthing Materials". In such a known clamp the body and the receiving member are made of brass or a similar copper alloy, by injection moulding, casting or thermopressing or from an extruded profile. The receiving member surrounds an opening in which the ground electrode and the connecting lead are arranged in common and firmly clamped together by the screwthreaded element in the form of a bolt extending in the opening of the receiving member. By using injection moulding or one of the other above-mentioned methods this clamp is expensive.

The object of the invention is to provide a clamp of the kind set forth above which can be manufactured at lower costs.

With a clamp according to the invention this is achieved in that the receiving member is a sheet material strip, bent to form a substantially closed shape and in that the body is formed by opposing substantially semi-cylindrically formed end portions of the receiving member, which are provided with screwthread on their inner surfaces and by an annular element extending around said end portions and the screwthreaded element engaged therein, the receiving member extending outwardly with respect to a line drawn between a respective end portion and the point of contact between the receiving member and the object to be clamped. For the manufacture of the clamp embodying the invention it is therefore sufficient to use a relatively cheap bending gauge, so that this clamp can be made cheaper than a clamp manufactured by a conventional method. When the clamp is tightened by forceably screwing the screwthreaded element against the object, the outwardly bent parts of the receiving member adjacent the ends are exposed to an inwardly directed reactive force. Thus the ends having internal screwthread are more strongly pressed against the screwthreaded element so that a satisfactory transfer of forces and, in addition, a locking effect are obtained.

In a further advantageous embodiment each end portion is provided with a rim bent over outwardly protruding beyond the annular element. The annular element therefore cannot be forced off the ends of the receiving member as a consequence of the forces occurring when tightening the screwthreaded element.

A simple assembly of the clamp according to the invention is possible when according to another aspect the two substantially semi-cylindrical end portions each are less than half-cylindrical so that these end portions may be forced together when the screwthreaded element is not engaged therein to permit the annular element to be slipped over the rim.

A disadvantage not yet mentioned of the known clamp made by injection moulding for fastening a ground electrode to a connecting wire resides in that this clamp is very sensitive to corrosion so that a satisfactory electric contact between the ground electrode and the connecting wire becomes hazardous.

A further object of the invention is, therefore, to provide a clamp which is resistant to corrosion. With a clamp according to the invention this is achieved by making the receiving member from copper. The copper alloy used for injection moulding the known clamp must necessarily contain much zinc. This high percentage involves unfavourable corrosion characteristics for the clamp. Since the clamp embodying the invention is made from sheet material, copper can be used, the corrosion behaviour of which is very advantageous.

The screwthreaded element used for such a clamp is preferably a corrosion resistant bolt, such as a bolt of a hard copper alloy, having appropriate strength together with satisfactory resistance to corrosion.

The invention will be described more fully with reference to representations of embodiments of the invention.

Fig. 1 is a perspective view with dissembled parts of a bracket embodying the invention in the form of a clamp.

Fig. 2 is a side elevation of the bracket of Fig. 1 in the mounted state.

The receiving member 12 of the clamp 10 is bent to form a substantially closed shape and the body 11 comprises the two ends 13 of the receiving member 12. The body 11 comprises furthermore a ring 14 extending around the ends 13. The clamp 10 is particularly intended to clamp a connecting wire 16 to a ground electrode 15.

The two ends 13 of the receiving member 12 are bent into a semi-cylindrical shape and the inner surface of said ends has a screwthread 18. A bolt 17 can engage the screwthread 18. With this bracket embodying the invention the ends 13 are held together by the ring 14 so that the bolt 17 can strongly clamp the ground electrode 15 located in the receiving member 12 against the connecting wire 16 without deflection of the ends 13 of the receiving member.

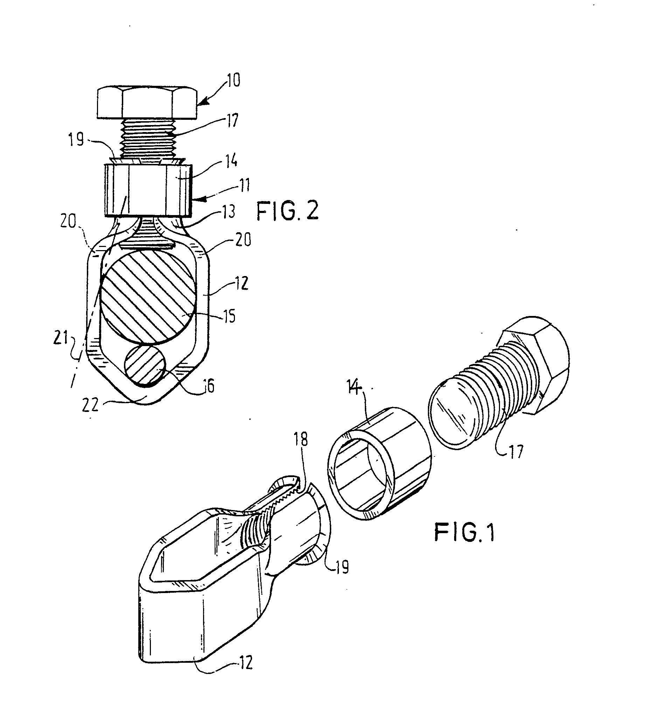

From Fig. 1 it will be apparent that the receiving member 12 is made from a strip of sheet material. The outermost rim of the receiving member 12 is bent over outwardly. Without the bolt 17 being arranged in place the ring 14 can be moved over the rim 19 and around the ends 13 of the receiving member 12 by pinching said ends towards one another. When afterwards the bolt 17 is mounted, the ring 14 is thus locked in place by the rim 19.

According to a further aspect of the invention the parts 20 of the receiving member 12 are extending outwardly with respect to a line 21 drawn between a respective end portion 13 and the point of contact between the receiving member 12 and the ground electrode 15. When the bolt 17 is firmly screwed into the screwthreaded opening of the body 11 in order to clamp together the ground electrode 15 and the connecting wire, the parts 20 are exposed to a reactive force tending to stretch said parts 20. With reference to Fig. 2 it will be apparent that in this way the lower parts of the ends 13, that is to say the parts adjacent the parts 20 are forced towards one another. This results in that the engagement between the screwthread 18 and the bolt 17 is intensified and, moreover, the bolt 17 is locked by the clamping effect.

The receiving member 12 is furthermore advantageously provided at its lower end with an acute corner 22 so that the connecting wire 16 is locked against turning.

The receiving member 12 may be made from any suitable sheet material and for the use shown in Figs. 1 and 2 it is made from copper sheet.

## Claims

1. A clamp (10) comprising a substantially annular receiving member (12) for an object (15) to be clamped, a body (11) connected to said receiving member and having an internally screwthreaded bore, and a screwthreaded element such as a bolt (17) engaging said bore and having a length such that it can come into contact with the object received in the receiving member characterized in that the receiving member is a sheet material strip, bent to form a substantially closed shape and in that the body is formed by opposing substantially semi-cylindrically formed end portions (13) of the receiving member, which are provided with screwthread (18) on their inner surfaces and by an annular element (14) extending around said end portions and the screwthreaded element engaged therein, the receiving member extending outwardly with respect to a line (21) drawn between a respective end portion and the point of contact between the receiving member and the object to be clamped.

2. A clamp as claimed in claim 1 characterized in that each end portion is provided with a rim (19) bent over outwardly protruding beyond the annular element.

3. A clamp according to claim 2 characterized in that the two substantially semi-cylindrical end portions each are less than half-cylindrical so that these end portions may be forced together when the screwthreaded element is not engaged therein to permit the annular element to be slipped over the rim.

4. A clamp as claimed in any one of the preceding claims intended for fastening a connecting wire (16) to a ground electrode (15) characterized in that the receiving member is made of copper.

5. A clamp according to claim 4 characterized in that the screwthreaded element is formed by a corrosion resistant bolt, such as a bolt of a hard copper alloy.

## Patentansprüche

1. Eine Klammer (10) mit einem im wesentlichen ringförmigen Aufnahmebauteil (12) für einen festzuklemmenden Gegenstand (15), einem Körper (11), der mit dem Aufnahmebauteil verbunden ist und eine mit Innengewinde versehene Bohrung aufweist, und einem mit Schraubgewinde versehenen Element wie einem Bolzen (17), der mit der Bohrung in Eingriff steht und eine solche Länge aufweist, daß er in Berührung mit dem im Aufnahmebauteil aufgenommenen Gegenstand kommt, dadurch gekennzeichnet, daß das Aufnahmebauteil ein Blechmaterialstreifen ist, der gebogen ist, um eine im wesentlichen geschlossene Form zu bilden, und daß der Körper durch gegenüberliegende, im wesentlichen halbzylindrisch geformte Endteile (13) des Aufnahmebauteils gebildet ist, welche auf ihren Innenflächen mit Schraubgewinde (18) versehen sind, und durch ein ringförmiges Element (14), welches sich um die Endteile herum erstreckt, in welche das mit Schraubgewinde versehene Element eingreift, wobei sich das Aufnahmebauteil nach außen erstreckt in Bezug auf eine Linie (21), welche zwischen einem jeweiligen Endteil und dem Berührungspunkt zwischen dem Aufnahmebauteil und dem festzuklemmenden Gegenstand gezogen ist.

2. Eine Klammer nach Anspruch 1, dadurch gekennzeichnet, daß jeder Endteil mit einem Rand (19) versehen ist, der nach außen umgebogen ist und über das ringförmige Element vorspringt.

3. Eine Klammer nach Anspruch 2, dadurch gekennzeichnet, daß die beiden im wesentlichen halbzylindrischen Endteile weniger als halbzylindrisch sind, so daß diese Endteile gegeneinander gedrückt werden können, wenn das mit Schraubgewinde versehene Element nicht in diese eingreift, um ein Überschieben des ringförmigen Elements über den Rand zu ermöglichen.

4. Eine Klammer nach irgendeinem der vorhergehenden Ansprüche zum Befestigen eines Verbindungsdrahtes (16) mit einer Massenelektrode (15), dadurch gekennzeichnet, daß das Aufnahmebauteil aus Kupfer besteht.

5. Eine Klammer nach Anspruch 4, dadurch gekennzeichnet, daß das mit Schraubgewinde versehene Element von einem korrosionsbeständigen Bolzen wie einem Bolzen aus einer Hartkupferlegierung gebildet ist.

## Revendications

1. Collier (10) comprenant un élément récepteur sensiblement annulaire (12) pour un objet (15) à fixer, un corps (11) relié audit élément récepteur et présentant un alésage intérieurement fileté, et un élément fileté tel qu'un boulon (17) s'engageant dans ledit alésage et présentant une longueur telle qu'il puisse venir en contact avec l'objet logé dans lélément récepteur, caractérisé en ce que l'élément récepteur est une bande de matériau en feuille, pliée de façon à constituer une forme sensiblement fermée, et en ce que le corps est formé par des parties extrêmes (13) de l'élément récepteur, de forme sensiblement semi-cylindrique et opposées et qui sont munies d'un filetage (18) sur leurs surfaces intérieures, et par un élément annulaire (14) qui s'etend autour desdites parties extrêmes et de l'élément fileté qui y est engagé, l'élément récepteur s'étendant vers l'extérieur par rapport à une ligne (21) tirée entre une partie extrême respective et le point de contact entre cet élément récepteur et l'objet à serrer.

2. Collier tel que revendiqué dans la revendication 1, caractérisé en ce que chaque partie extrême est munie d'un rebord (19) qui est replié vers l'extérieur en faisant saillie au-delà de l'élément annulaire.

3. Collier selon la revendication 2, caractérisé en ce que les deux parties extrêmes sensiblement semi-cylindriques sont chacune inférieure à un demi-cylindre, si bien que ces parties extrêmes peuvent être repoussées ensemble lorsque l'élément fileté n'y est pas engagé, afin de permettre de glisser l'élément annulaire pardessus le rebord.

4. Collier tel que revendiqué dans l'une quelconque des revendications précédentes et destiné à fixer un fil de connexion (16) sur une prise de terre (15), caractérisé en ce que l'élément récepteur est réalisé en cuivre.

5. Collier selon la revendication 4, caractérisé en ce que l'élément fileté est formé par un boulon résistant à la corrosion, tel qu'un boulon en un alliage de cuivre dur.

FIG. 2

FIG. 1